# EUROPÄISCHE PATENTANMELDUNG

(11) **EP 4 075 350 A1**
(43) Veröffentlichungstag der Anmeldung: **19.10.2022**
(21) Anmeldenummer: 21167876.8
(22) Anmeldetag: 12.04.2021
(51) Int. Cl.: G06Q 10/00

(54) **VERFAHREN ZUM ABSICHERN EINER ASSET-WARTUNGSINFORMATION UND ASSET MIT EINEM LEBENSZYKLUS-BLOCKCHAIN-KNOTEN**

(71) Anmelder: Siemens Aktiengesellschaft, 80333 München (DE)
(72) Erfinder: Deeg, Christian, 90518 Altdorf (DE); Manger, Matthias, 90762 Fürth (DE); Wacker, Bernd, 91074 Herzogenaurach (DE)

(57) **Zusammenfassung**

Verfahren zum Absichern einer Asset-Wartungsinformation eines Assets (1), wobei Genesis-Transaktionsdaten (6) in Abhängigkeit von herstellerspezifischen Asset-Daten (3) generiert werden; basierend auf den Genesis-Transaktionsdaten eine DLT-Datenstruktur (6) generiert wird; in Reaktion auf eine das Asset (1) betreffende Lebenszyklusaktivität, bei welcher wartungsbezogene Asset-Daten entstehen, basierend auf den bei der Lebenszyklusaktivität entstandenen wartungsbezogenen Asset-Daten Transaktionsdaten generiert und der DLT-Datenstruktur (6, 6', 6'', 6''') hinzugefügt werden, die DLT-Datenstruktur (6, 6', 6'', 6''') an mindestens einen DLT-Knoten (2, 20, 21, 22, 23) verteilt wird, um die wartungsbezogenen Asset-Daten abzusichern.

## Beschreibung

Die Erfindung betrifft ein Verfahren zum Absichern einer Asset-Wartungsinformation.

Darüber hinaus betrifft die Erfindung ein Asset, vorzugsweise ein industrielles Asset beziehungsweise ein Asset einer Industrieanlage mit einem Lebenszyklus-Blockchain-Knoten.

Non Conformance Kosten (Mehrkosten) werden oftmals im Lebenszyklus durch unsachgemäße Wartung, Einbau falscher Ersatzteile oder beim Umbau/Umrüsten erzeugt. Nach Werksauslieferung / Inverkehrbringung aus dem Herstellerwerk ist es oft nicht nachvollziehbar, wer, wann und welchen Eingriff am Produkt gemacht hat.

Industrieprodukte werden nicht selten verkauft, weiterverkauft, verwertet durch Ankauf und gebraucht wiederverkauft. Der Lebenszyklus eines elektrischen Motors kann beispielsweise 25-40 Jahre betragen. PCs oder andere Geräte mit Datenträgern haben in der Regel eine deutlich kürzere Lebenszeit. Dokumentationen bzgl. der Wartung oder Modifikationen während des Lebenszyklus sind unvollständig, fragmentiert oder nicht vorhanden.

Verschleißbehaftete industrielle Produkte, wie z.B. Motoren, Getriebe, etc., haben relativ lange Produktlebenszyklen, während denen zahlreiche regelmäßige oder unregelmäßige Wartungsarbeiten und Modifikationen notwendig werden. Oft gibt es bei diesen Produkten nach Jahren keine, bis wenig Transparenz ob Wartungsarbeiten im notwendigen Intervall oder mit den zugelassenen Ersatzteilen oder durch qualifiziertes Personal durchgeführt werden. Oft hat das verkürzte Lebenszyklen zur Folge, da falsch (zu oft, zu selten, mit falschen Verbrauchsmaterialien, falschen oder nicht vorhandenen Messmethoden, ...) gewartet, ausgetauscht oder repariert wird. Bei Ausfällen kommt es dann anschließend oft zu aufwendigen Klärungen bei den Herstellern über Kostenübernahmen, Gewährung von Gewährleistung/Garantieleistungen und dabei zu langwierigen Rückwarentransporten und Befundungen.

Instandsetzungszeiträume dauern oft länger als notwendig. Umweltschutzkonzepte wie Second Life Ansätze verstärken diese Problematik.

Heutzutage wird die Dokumentation von Wartung, Modifikation etc. bei der jeweils beauftragten Firma oder beim Original Equipment Manufacturer (Maschinenbauer) durchgeführt und erfolgt meist in lokalen PCs, Servern mittels geeigneter Software (z.B. Asset Management Systeme) oder auch in Papierform.

Die Aufgabe der vorliegenden Erfindung kann somit darin gesehen werden, Verfahren und Vorrichtung bereitzustellen, die dabei helfen die Lebenszyklusaktivitäten eines industriellen Assets sicher zu dokumentieren und über längere Zeit aufzubewahren.

Die Aufgabe wird mit einem eingangs genannten Verfahren erfindungsgemäß dadurch gelöst, dass
- Genesis-Transaktionsdaten in Abhängigkeit von herstellerspezifischen Asset-Daten generiert werden,
- basierend auf den Genesis-Transaktionsdaten eine DLT-Datenstruktur (DLT für engl. Distributed Ledger Technology) generiert wird,
- in Reaktion auf eine, vorzugsweise jede das Asset betreffende Lebenszyklusaktivität, bei welcher wartungsbezogene Asset-Daten entstehen, basierend auf den bei der Lebenszyklusaktivität entstandenen wartungsbezogenen Asset-Daten Transaktionsdaten generiert und der DLT-Datenstruktur hinzugefügt werden,
- die DLT-Datenstruktur an mindestens einen, vorzugsweise an alle DLT-Knoten verteilt wird, um die wartungsbezogenen Asset-Daten abzusichern.

Vorzugsweise entstehen bei der das Asset betreffenden Lebenszyklusaktivität nur die wartungsbezogenen Daten.

Im Zusammenhang mit der vorliegenden Erfindung werden unter dem Begriff "Lebenszyklusaktivität von einem Asset" beispielsweise Projektierung, Engineering, Herstellung, Betrieb, Service und Wartung, Ersatzteilbeschaffung und Verschrottung verstanden.

Bei einer Ausführungsform kann vorgesehen sein, dass nach jeder Lebenszyklusaktivität die aktualisierte DLT-Datenstruktur verteilt wird.

Dadurch wird es OEMs, Serviceprovidern sowie Wartungsverantwortlichen ermöglicht, verlässlich und für jeden nachvollziehbar durchgeführte Wartungsarbeiten/Modifikationen, verwendete zugelassene Ersatzteile und Verbrauchsmaterialien nachvollziehbar und fälschungssicher zu dokumentieren.

Die herstellerspezifischen Asset-Daten müssen eine einmalige (engl. Unique) Instanz als Grundinhalt haben. Instanzdaten müssen eine eineindeutige Datenreferenz ("Fingerabdruck") enthalten welche sie ausweist mit Name und Herkunft. Instanzdaten müssen die Seriennummer (Name) und darüber hinaus z.B. Hersteller "X", Gerätewerk "Y", Zertifikat "ABC" etc. und/ oder Geräte-MAC-Adresse und/oder Geräte-IP-Adresse und/oder Geräte-MLFB (statisch) (MLFB für engl. Maschinenlesbare Fabrikatebezeichnung) und/oder ein Herstellergerätezertifikat (engl. Manufacturer Device Certificate, MDC) (statisch) und/oder einen oder mehrere öffentliche und private Schlüssel und/oder OEM-spezifische Daten und/oder integratorspezifische Daten und/oder kundenanlagen- bzw. kundenteilanlagenspezifische Daten (z.B. CDC, für engl. Customer Device Certificate) und/oder projektbezogenes Gerätezertifikat (engl. Project related Device Certificate, PDC) oder (falls das Gerät in mehreren Projekten eingesetzt wird) eine Mehrzahl an derartigen Zertifikaten (dynamisch) und/oder weitere Informationen bzgl. der technischen und mechanischen Features, u.a. bzgl. der Performance und der unterstützten Kommunikations- und/oder Applikationsprotokolle (statisch und/oder dynamisch) umfassen.

Ein DLT-Knoten kann einen maschinenlesbaren, z.B. flüchtigen oder nicht-flüchtigen Speicher, auf dem maschinenausführbare Komponenten gespeichert werden können, und einen mit dem maschinenlesbaren Speicher operativ gekoppelten Prozessor umfassen, der dazu konfiguriert ist, die maschinenausführbaren Komponenten auszuführen.

Bei einer Ausführungsform kann vorgesehen sein, dass die DLT eine Blockchain ist. Andere auf DLT basierende Datenstrukturen sind ebenfalls denkbar: DAG (Directed Acrylic Graph), Ethereum, Hyperledger Fabric etc.

Bei einer Ausführungsform kann vorgesehen sein, dass die Blockchain Private und/oder Permissioned ist.

Bei einer Ausführungsform kann vorgesehen sein, dass die Blockchain Private und Permissionless ist. Dies kann insbesondere für Auditzwecke ein Vorteil sein.

Bei einer Ausführungsform kann vorgesehen sein, dass ein Auslieferungswerk des Assets einen DLT-Knoten und ein digitales Abbild des Assets - den sogenannten digitalen Zwilling - umfasst oder mit seiner Instanz auf seinen digitalen Zwilling verlinkt ist.

Ein Asset-Digital-Twin ist beispielsweise ein digitales Abbild des physisch existierenden Assets, welches Daten und Informationen seines Typs, seines Verhaltens und Daten seiner (eventuell gesamten) Zeitachse enthält, die unter Nutzern/ Tools ausgetauscht werden und in ein oder mehrere virtuelle geometrische, physikalische (mech., elektr., thermische, verrichtete Arbeit, aufgewendete Kraft/Drehmoment, Zustandsänderungen wie Vibration, Magnetfeld, Temperatur) oder chemische Abbilder konfiguriert werden können.

Das bringt den Vorteil, dass ein digitales "Scheckheft" basierend auf Verwendung von DLT als Teil des digitalen Zwillings von Industrieprodukten vorliegt. Dadurch kann es ermöglicht werden, dass notwendigen Lebenszyklusinformationen zum betriebenen Produkt/Asset durchgängig und fälschungssicher dokumentiert werden können.

Bei einer Ausführungsform kann vorgesehen sein, dass wartungsbezogene Asset-Daten Informationen hinsichtlich durchgeführter Wartungsarbeiten und/oder Modifikationen und/oder verwendeter Ersatzteile und/oder Verbrauchsmaterialien umfassen.

Bei einer Ausführungsform kann vorgesehen sein, dass die Transaktionsdaten von einer die Lebenszyklusaktivität hervorrufenden Entität digital signiert werden. Dadurch kann es ermöglicht werden, dass die notwendigen Lebenszyklusinformationen zum betriebenen Produkt/Asset durchgängig durch die digitale Signatur gelabelt werden können.

Die verwendeten Label können die Legitimität der Person/Firma sicherstellen, die die Arbeitsinhalte durchgeführt hat. Verwendete Label können z.B. sein: "Auslieferungszustand OEM, Modifikation durch OEM oder zertifizierter Partner bzw. Serviceprovider des OEM, Analgenbetreiber". Oder auch "Verwendung von OEM Ersatzteilen, durch OEM freigegebenes gleichwertiges Ersatzteil bzw. Verbrauchsmaterial oder Drittmaterial, ..."

Bei einer Ausführungsform kann vorgesehen sein, dass das Asset eine elektrische rotatorische Maschine, z.B. ein Motor, ein Antrieb, ein Antrieb mit einem Motor, eine Maschine, z.B. eine Werkzeugmaschine, insbesondere eine Fräsmaschine, eine Anlage, insbesondere eine Industrieanlage ist.

Bei einer Ausführungsform kann vorgesehen sein, dass die herstellerspezifischen Asset-Daten an beziehungsweise in dem Asset hardwaregebunden hinterlegt sind. Z.B. können die herstellerspezifischen Asset-Daten auf einem nicht wiederbeschreibbaren Datenspeicher eines an oder in dem Asset angeordneten In-Metal RFIDs (RFID In/on Metal) hinterlegt sein; der besondere Vorteil ist, dass zumindest die Instanzdaten darin über den gesamten Lebenszyklus erhalten bleiben, es sei denn es wird mechanisch unwiederbringlich zerstört. Darüber hinaus können die herstellerspezifischen Asset-Daten z.B. in einem sogenannten in die zugrundeliegende Hardware integrierten Hardware Secure Element, z.B. TPM (Trusted Platform Module) oder HSM (Hardware Security Module) hinterlegt sein.

Außerdem wird die Aufgabe mit einem eingangsgenannten Asset erfindungsgemäß dadurch gelöst, dass das Asset herstellerspezifische Asset-Daten und einen DLT-Knoten umfasst, wobei der DLT-Knoten dazu eingerichtet ist,
- Genesis-Transaktionsdaten in Abhängigkeit von den herstellerspezifischen Asset-Daten zu generieren,
- basierend auf den Genesis-Transaktionsdaten eine DLT-Datenstruktur zu erzeugen,
- in Reaktion auf eine, vorzugsweise jede das Asset betreffende Lebenszyklusaktivität, bei welcher wartungsbezogene Asset-Daten entstehen, basierend auf den bei der Lebenszyklusaktivität entstandenen wartungsbezogenen Asset-Daten Transaktionsdaten zu generieren und der DLT-Datenstruktur hinzu zu fügen,
- die DLT-Datenstruktur an mindestens einen, vorzugsweise an alle DLT-Knoten zu verteilen, um die wartungsbezogenen Asset-Daten abzusichern.

Bei einer Ausführungsform kann vorgesehen sein, dass die herstellerspezifischen Asset-Daten in dem Asset hardwaregebunden hinterlegt sind. Z.B. können die herstellerspezifischen Asset-Daten, z.B. eine Seriennummer in einem nicht veränderbaren, nicht beschreibbaren in das Asset eingebetteten Speicher hinterlegt sein. Zum Beispiel können die herstellerspezifischen Asset-Daten auf einem nicht wiederbeschreibbaren Datenspeicher eines an oder in dem Asset angeordneten In-Metal RFIDs hinterlegt sein.

Die herstellerspezifischen Asset-Daten, z.B. die Seriennummer des Produktes kann beispielsweise als Hash ebenfalls am Produkt eingebaut sein, und zwar derart, dass er nur durch Zerstörung entfernt werden kann.

Bei einer Ausführungsform kann vorgesehen sein, dass die DLT eine Blockchain ist.

Bei einer Ausführungsform kann vorgesehen sein, dass die Blockchain Private und/oder Permissioned ist.

Bei einer Ausführungsform kann vorgesehen sein, dass wartungsbezogene Asset-Daten Informationen hinsichtlich durchgeführter Wartungsarbeiten und/oder Modifikationen und/oder verwendeter Ersatzteile und/oder Verbrauchsmaterialien umfassen.

Bei einer Ausführungsform kann vorgesehen sein, dass die Transaktionsdaten von einer die Lebenszyklusaktivität hervorrufenden Entität digital signiert werden.

Bei einer Ausführungsform kann vorgesehen sein, dass das Asset ein Motor, ein Antrieb, ein Antrieb mit einem Motor, eine Maschine oder eine Anlage ist.

Mit anderen Worten betrifft die vorliegende Offenbarung die DLT-Datenstruktur, die dem Asset bei der Herstellung mitgegeben und während des Lebenszyklus bis zur Verschrottung gepflegt (erweitert / fortgeschrieben) wird. Die Speicherung kann lokal am Asset sowie in den beteiligten Nodes/Knoten erfolgen. Die jeweils aktuelle Version kann als Kopie im digitalen Zwilling des OEM sowie auf weiteren Nodes hinterlegt werden, die bisher beteiligt waren.

Die Verifikation / Bestätigung der DLT Legitimität kann beispielsweise durch Abgleich mit den an der Modifikation beteiligten berechtigten dezentralen Systemen (Cloud, Edge, ...) und durch anschließende Vererbung auf den lokalen Assetspeicher erfolgen.

Vorteilhaft dabei ist, dass es keine Abhängigkeit von einer lokalen Serverlösung, die über mehrere Jahrzehnte ein Autorisierungs- und Usermanagement beherrschen muss, gibt.

Darüber hinaus kann eine fälschungssichere und legitimierte Dokumentation von Modifikations-, Wartungs- und Pflegearbeiten im digitalen Zwilling durch die Verwendung von Blockchain-Technologie und Speicherung im digitalen Produktzwilling des Herstellers über den gesamten Produktlebenszyklus ermöglicht werden.

Außerdem können Gewährleistungs- und Garantieentscheidungen beschleunigt werden. Dadurch kann die gesamte Abwicklung von Schadensfällen von Industrieequipment vereinfacht werden und ebenfalls schneller durchgeführt werden.

Im Folgenden wird die Erfindung anhand der in den Figuren dargestellten Ausführungsbeispiele näher beschrieben und erläutert. Es zeigen:
- FIG 1: eine IT-Infrastruktur zum Absichern einer Asset-Wartungsinformation eines Assets, und
- FIG 2: ein Flussdiagramm eines Verfahrens zum Absichern einer Asset-Wartungsinformation eines Assets.

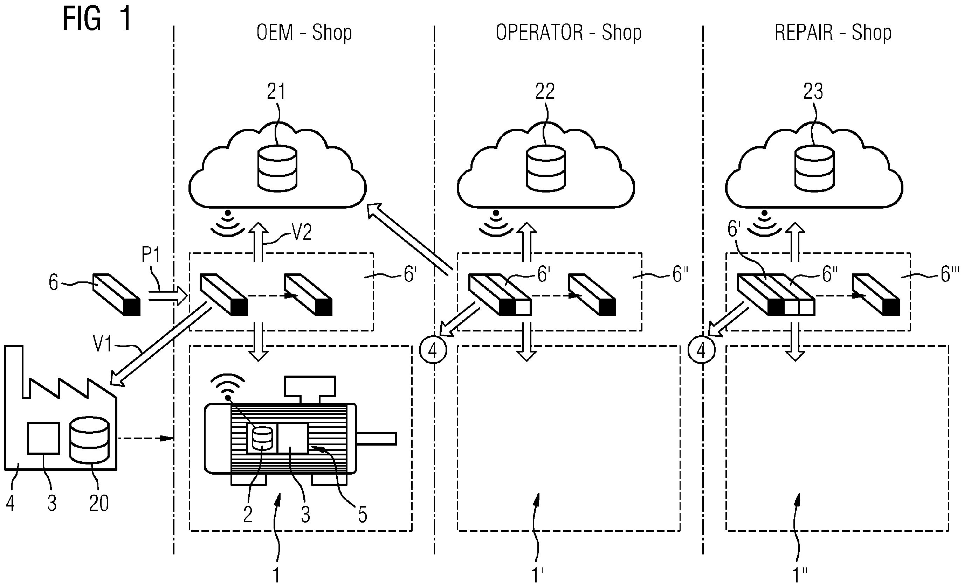

FIG 1 zeigt eine IT-Infrastruktur zum Absichern einer Asset-Wartungsinformation eines Assets. Ein Asset, welches hier beispielsweise als ein Motor 1, z.B. ein Asynchronmotor, ausgebildet ist, weist einen Blockchain-Knoten, der hier als ein System-on-a-Chip (SoC) 2 ausgebildet ist. Der Motor 1 umfasst außerdem herstellerspezifische Asset-Daten, die hier beispielhaft in Form eines Hashwertes 3 eines Motor-Identifizierers beispielsweise einer Seriennummer des Motors 1 vorliegen, die der Motor 1 bei der Herstellung in einer Fertigungsanlage 4 erhalten hat.

FIG 1 lässt erkennen, dass der Hashwert 3 nicht auf dem SoC 2 gespeichert sein muss. Der Hashwert 3 kann auf einer von dem SoC 2 baulich getrennt ausgebildeten Vorrichtung gespeichert sein.

Vorzugsweise ist der Hashwert 3 in dem Motor 1 hardwaregebunden hinterlegt. Zum Beispiel kann der Hashwert 3 auf einem nicht wiederbeschreibbaren Datenspeicher eines In-Metal RFIDs 5 hinterlegt sein. Das In-Metal RFID 5 kann beispielsweise derart an oder in dem Motor 1 angeordnet sein, dass seine Entfernung nur durch seine (des In-Metal RFIDs) Zerstörung und folglich durch Zerstörung des Hashwerts 3 möglich ist. Beispielsweise kann das In-Metal RFID 5 in ein Mutterteil z.B. in das Motorgehäuse, das den Stator des Motors 1 beherbergt, eingebettet sein. Das kann beispielsweise durch ein Senkloch in dem Motorgehäuse erfolgen, in welches das In-Metal RFID 5 nicht lösbar eingeklebt werden kann.

Der Blockchain-Knoten 2 kann einen maschinenlesbaren, z.B. flüchtigen oder nicht-flüchtigen Speicher, auf dem maschinenausführbare Komponenten gespeichert werden können, und einen mit dem maschinenlesbaren Speicher operativ gekoppelten Prozessor umfassen, der dazu konfiguriert ist, die maschinenausführbaren Komponenten auszuführen.

Darüber hinaus kann das System-on-a-Chip (SoC) 2 eine Kommunikationseinrichtung umfassen, die beispielsweise dazu eingerichtet sein kann, mit dem In-Metal RFID 5 zu kommunizieren und den Hashwert 3 abzulesen. Hierzu kann die Kommunikationseinrichtung beispielsweise einen Near-Field-Communication (NFC) Chip umfassen. Dabei kann es zweckdienlich sein, wenn das SoC 2 den In-Metal-RFID-Chip 5 in Funkreichweite hat.

Darüber kann es zweckmäßig sein, wenn der Blockchain-Knoten 2 mit einem Kommunikationsmodem ausgestattet ist. Im Allgemeinen kann die Kommunikationseinrichtung dazu ausgebildet sein, über eine bestimmte beispielsweise drahtlose Kommunikationsart zu kommunizieren: Mobilfunk (z.B. 4G, 5G), Bluetooth, WiFi, LAN, Bus, LPWAN Standards etc.

Anhand des Hashwertes 3 kann der als SoC ausgebildete Blockchain-Knoten 2 Genesis-Transaktionsdaten generieren und basierend auf den Genesis-Transaktionsdaten den ersten Block der Blockchain erzeugen - den sogenannten Genesis-Block 6.

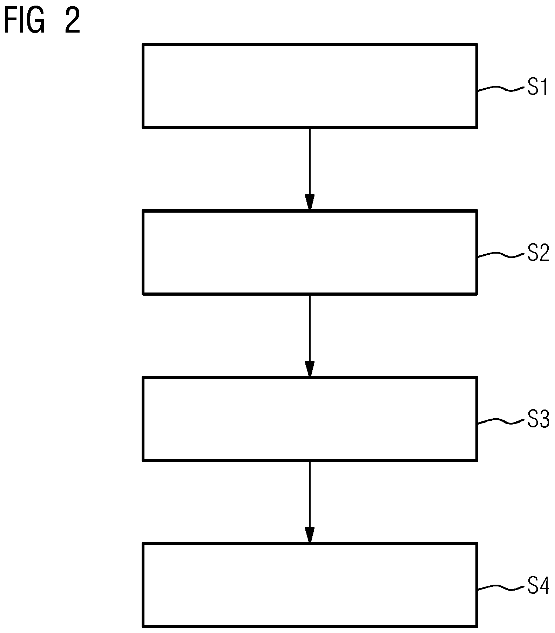

Dies kann im Rahmen von Schritten S1 und S2 des in FIG 2 abgebildeten Verfahrens erfolgen. Schritte S1 und S2 können beispielsweise bereits in der Fertigungshalle 4 des Herstellers des Motors 1 erfolgen, so dass der Motor 1 bereits mit einer Blockchain-Datenstruktur (mit dem Genesis-Block 6) in den OEM-Shopfloor (Produktionshalle des Originalausrüstungsherstellers) geliefert werden kann (Pfeil P1).

Es kann zweckmäßig sein, wenn sowohl die Fertigungshalle bzw. das Auslieferungswerk 4 als auch der Originalausrüstungshersteller jeweils über einen Blockchain-Knoten - Hersteller-Blockchain-Knoten 20 und OEM-Blockchain-Knoten 21 - verfügen und an der mit dem Motor 1 assoziierten Blockchain teilnehmen.

Führt der Originalausrüstungshersteller beispielsweise gleich bei Inbetriebnahme des Motors 1 eine Modifikation durch, entstehen Daten, die auf den Motor bezogen und deshalb seiner Wartung inhärent sind - wartungsbezogene Motor-Daten.

Basierend auf den bei dieser Lebenszyklusaktivität entstandenen wartungsbezogenen Motor-Daten können in Schritt S3 Transaktionsdaten generiert und zu der Blockchain hinzugefügt werden.

Das Generieren der Transaktionsdaten und Hinzufügen dieser Transaktionsdaten zu der Blockchain (Blockchain-Erweiterung), wobei zunächst auf eine aus dem Stand der Technik bekannte Weise ein Block 6' generiert wird, kann beispielsweise durch das SoC 2 erfolgen. Der Motor mit der erweiterten Blockchain aus Blöcken 6 und 6' ist der Motor 1.

Optional können die Motor-Daten und/oder die Transaktionsdaten von dem OEM digital signiert werden.

Es kann vorgesehen sein, dass sich der OEM-Blockchain-Knoten 21 zunächst autorisieren muss, bevor er dem SoC 2 die wartungsbezogenen Motor-Daten zuführt. Hierzu können bekannte Kryptoverfahren, beispielsweise asymmetrische Kryptosysteme verwandt werden. Z.B. kann es vorgesehen sein, dass jeder Blockchain-Knoten der Blockchain einen Schlüssel besitzen muss, um an der Blockchain teilnehmen zu können.

Außerdem kann es vorgesehen sein, dass der Blockchain-Knoten 2 sich mit dem In-Metal RFID 5 paart, um den Hashwert 3 mit einem Hashwert in dem Genesis-Block 6 abzugleichen. Dies kann als eine Bedingung zur Fortschreibung der Blockchain fungieren: Stimmen die Werte überein, so kann die Blockchain fortgeschrieben werden.

Anschließen in Schritt S4 kann der Blockchain-Knoten 2 die neue Blockchain (die aktualisierte Blockchain-Datenstruktur, den Ledger) an andere Knoten 20, 21 verteilen (Pfeile V1, V2) .

Dadurch, dass Hersteller-Blockchain-Knoten 20 an der Blockchain teilnimmt, ergibt sich der Vorteil, dass beispielsweise auch ein Digital Twin des Motors 1 fälschungssicher und autorisiert dokumentierbar ist.

Die Blockchain kann eine Private Blockchain sein. Sie kann zusätzlich oder stattdessen Permissioned sein. Zu Audit-Zwecken kann es zweckdienlich sein, wenn die Blockchain Private und Permissionless ist.

Während der Lebenszeit des Motors 1 können weitere Blockchain-Knoten, wie z.B. Operator-Knoten 22, Reparaturwerkstatt-Knoten 23, Versicherung-Knoten (nicht gezeigt) hinzukommen.

Die Lebenszyklusaktivitäten, bei welchen auf in etwa gleiche Weise der Motor-Blockchain weitere Blöcke 6", 6'" hinzugefügt werden, können Wartungs-, Reparatur-, weitere Modifikationsarbeiten, z.B. Upgrade, etc. umfassen und so den Zustand des Motors verändern, wobei die Änderungen in der Blockchain des Motors hinterlegt werden (Motor 1' mit Blöcken 6, 6', Motor 1" mit Blöcken 6, 6', 6" usw.)

Nach jeder Blockchain-Erweiterung wird die aktuelle Blockchain in Kopie an alle beteiligten Knoten verschickt (mit Pfeilen in FIG 1 gezeigt).

Die wartungsbezogenen Motor-Daten können Informationen hinsichtlich durchgeführter Wartungsarbeiten und/oder Modifikationen und/oder verwendeter Ersatzteile und/oder Verbrauchsmaterialien umfassen.

An dieser Stelle sei betont, dass der OEM eine eigene auf dem Genesis-Block 6 basierende Blockchain starten kann, ohne dass das Auslieferungswerk 4 daran teilnehmen muss.

Zusammenfassend betrifft die vorliegende Offenbarung industrielle Assets, die mit einer Blockchain versehen sind, bei der als verteilter Ledger die auf Asset-Lebenszyklus bezogenen Informationen dienen, und die Verfahren zur Blockchain-Generierung.

Obgleich in der FIG 1 nur ein einziges Feldgerät, in diesem Falle ein Aktuator ausgeprägt als Motor 1 zu sehen ist, entnimmt der Fachmann der vorliegenden technischen Lehre zweifelsohne, dass jeder Motor in einer Anlage mit einem Blockchain-Knoten umfassen kann, der an einen Blockchain teilnimmt, die zur Überwachung der den Motor betreffenden Lebenszyklusaktivitäten vorgesehen ist. Jedem Motor kann jeweils eine Blockchain-Datenstruktur zugeordnet sein, wobei unterschiedliche Motoren an unterschiedlichen Blockchains teilnehmen.

Weiterhin kann das Asset als eine elektrische rotatorische Maschine, ein Feldgerät, ein Aktuator, ein Antrieb, ein Antrieb mit einem Motor, eine Maschine, z.B. eine Werkzeugmaschine, insbesondere eine Fräsmaschine, eine Anlage, z.B. als eine Fertigungsanlage oder als eine Industrieanlage ausgebildet sein.

Obwohl die Erfindung im Detail durch Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen. Insbesondere können die im Zusammenhang mit dem Verfahren beschriebenen Merkmale auch bei dem gezeigten System bzw. Asset zum Einsatz kommen bzw. diese vervollständigen und *vice versa.*

## Patentansprüche

1. Verfahren zum Absichern einer Asset-Wartungsinformation eines Assets (1), wobei
- Genesis-Transaktionsdaten (6) in Abhängigkeit von herstellerspezifischen Asset-Daten (3) generiert werden,
- basierend auf den Genesis-Transaktionsdaten eine DLT-Datenstruktur (6) generiert wird,
- in Reaktion auf eine das Asset (1) betreffende Lebenszyklusaktivität, bei welcher wartungsbezogene Asset-Daten entstehen, basierend auf den bei der Lebenszyklusaktivität entstandenen wartungsbezogenen Asset-Daten Transaktionsdaten generiert und der DLT-Datenstruktur (6, 6', 6", 6"') hinzugefügt werden,
- die DLT-Datenstruktur (6, 6', 6", 6"') an mindestens einen DLT-Knoten (2, 20, 21, 22, 23) verteilt wird, um die wartungsbezogenen Asset-Daten abzusichern.

2. Verfahren nach Anspruch 1, wobei die DLT eine Blockchain ist.

3. Verfahren nach Anspruch 2, wobei die Blockchain Private und/oder Permissioned ist.

4. Verfahren nach einem der Ansprüche 1 bis 3, wobei wartungsbezogene Asset-Daten Informationen hinsichtlich durchgeführter Wartungsarbeiten und/oder Modifikationen und/oder verwendeter Ersatzteile und/oder Verbrauchsmaterialien umfassen.

5. Verfahren nach einem der Ansprüche 1 bis 4, wobei die Transaktionsdaten von einer die Lebenszyklusaktivität hervorrufenden Entität digital signiert werden.

6. Verfahren nach einem der Ansprüche 1 bis 5, wobei das Asset (1) eine elektrische rotatorische Maschine, z.B. ein Motor, ein Antrieb, ein Antrieb mit einem Motor, eine Maschine, z.B. eine Werkzeugmaschine, insbesondere eine Fräsmaschine, eine Anlage, insbesondere eine Industrieanlage ist.

7. Verfahren nach einem der Ansprüche 1 bis 6, wobei die herstellerspezifischen Asset-Daten (3) an bzw. in dem Asset (1) hardwaregebunden hinterlegt sind.

8. Asset, wobei das Asset (1) herstellerspezifische Asset-Daten (3) und einen DLT-Knoten (2) umfasst, wobei der DLT-Knoten (2) dazu eingerichtet ist,
- Genesis-Transaktionsdaten in Abhängigkeit von den herstellerspezifischen Asset-Daten (3) zu generieren,
- basierend auf den Genesis-Transaktionsdaten (6) eine DLT-Datenstruktur (6) zu erzeugen,
- in Reaktion auf eine das Asset betreffende Lebenszyklusaktivität, bei welcher wartungsbezogene Asset-Daten entstehen, basierend auf den bei der Lebenszyklusaktivität entstandenen wartungsbezogenen Asset-Daten Transaktionsdaten zu generieren und der DLT-Datenstruktur (6, 6', 6", 6"') hinzu zu fügen,
- die DLT-Datenstruktur (6, 6', 6", 6"') an mindestens einen DLT-Knoten (2, 20, 21, 22, 23) zu verteilen, um die wartungsbezogenen Asset-Daten abzusichern.

9. Asset nach Anspruch 8, wobei die herstellerspezifischen Asset-Daten in dem Asset hardwaregebunden hinterlegt sind.

10. Asset nach Anspruch 8 oder 9, wobei die DLT eine Blockchain ist.

11. Asset nach Anspruch 10, wobei die Blockchain Private und/oder Permissioned ist.

12. Asset nach einem der Ansprüche 8 bis 11, wobei wartungsbezogene Asset-Daten Informationen hinsichtlich durchgeführter Wartungsarbeiten und/oder Modifikationen und/oder verwendeter Ersatzteile und/oder Verbrauchsmaterialien umfassen.

13. Asset nach einem der Ansprüche 8 bis 12, wobei die Transaktionsdaten von einer die Lebenszyklusaktivität hervorrufenden Entität digital signiert werden.

14. Asset nach einem der Ansprüche 8 bis 13, wobei das Asset (1) ein Feldgerät, ein Aktuator, ein Motor, ein Antrieb, ein Antrieb mit einem Motor, eine Maschine oder eine Anlage ist.
